# EUROPEAN PATENT SPECIFICATION

(11) **EP 2 176 829 B1**
(45) Date of publication and mention of the grant of the patent: **01.12.2010**
(21) Application number: 08826248.0
(22) Date of filing: 07.07.2008
(51) Int. Cl.: G06T 3/40, G06T 7/00, G06K 9/00

(54) **ARRANGEMENT AND METHOD FOR PROCESSING IMAGE DATA**
ANORDNUNG UND VERFAHREN ZUR VERARBEITUNG VON BILDDATEN
DISPOSITIF ET PROCÉDÉ DE TRAITEMENT DE DONNÉES D'IMAGE

(30) Priority: 05.07.2007 US 948069 P
(43) Date of publication of application: 21.04.2010
(73) Proprietor: Siemens Industry, Inc., Alpharetta, GA 30005-4437 (US)
(72) Inventor: HORTON, David, C., Austin, TX 78704 (US)
(74) Representative: Morgan, Marc
(86) International application number: PCT/US2008/008325
(87) International publication number: WO 2009/009024

(56) References cited:
- US-A1- 2004 201 721
- BEYMER D ET AL: "A real-time computer vision system for measuring traffic parameters" COMPUTER VISION AND PATTERN RECOGNITION, 1997. PROCEEDINGS., 1997 IEEE COMPUTER SOCIETY CONFERENCE ON SAN JUAN, PUERTO RICO 17-19 JUNE 1997, LOS ALAMITOS, CA, USA,IEEE COMPUT. SOC, US, 17 June 1997 (1997-06-17), pages 495-501, XP010237570 ISBN: 978-0-8186-7822-6
- HOSPOD T F: "FLEXIBLE FRAME GRABBERS REFINE MACHINE VISION IN VIDEO INSPECTION SYSTEM" COMPUTER TECHNOLOGY REVIEW, WESTWORLD PRODUCTION, BEVERLY HILL, CA, US, vol. 9, no. 6, 21 March 1989 (1989-03-21), page 77/78,80/81, XP000112013 ISSN: 0278-9647
- RASTISLAV LUKAC ET AL: "Single-Sensor Image Compression from the End-User's Perspective" ELECTRICAL AND COMPUTER ENGINEERING, CANADIAN CONFERENCE ON, IEEE, PI, 1 May 2006 (2006-05-01), pages 1996-1999, XP031004667 ISBN: 978-1-4244-0038-6
- PEARL P R ET AL: "FRAME GRABBER PERFORMS REAL-TIME OBJECT ANALYSIS" LASER FOCUS WORLD, PENNWELL, TULSA, OK, US, vol. 33, no. 8, 1 August 1997 (1997-08-01), pages S11-S14,S16, XP000699670 ISSN: 1043-8092

## Description

The present invention relates generally to image capture and detection systems, and more particularly to methods and arrangements for obtaining image data.

### Background of the Invention

It is increasingly desirable to employ vehicle detection in traffic control systems. Detection of the presence and/or approach of vehicles allows for improved efficiency in traffic control. In a simplified example, a traffic signal may not change to green for a cross street for an indefinite time if there are no vehicles present on the cross street awaiting the signal. However, if a vehicle approaches the intersection on the cross street, the traffic signal may be changed responsive to the detection of such approach.

Historically, vehicle detection for traffic control has employed inductive sensors located under the road surface. The entrance of the automobile into a region near the inductive sensor changes the sensed magnetic field, thus enabling detection of the vehicle. A drawback of these systems is the need to implant the inductive sensors under or in the road surface pavement, which requires significant labor and traffic interruption. Because video cameras avoid the need to implant equipment below the road surface, camera-based vehicle detection systems are increasingly desirable.

Camera-based vehicle detection systems using video processing are known. One type of vehicle detection system performs vehicle detection on select areas of available video frames provided by a video camera. To this end, a video camera provides video frame information, typically in a format known as the Bayer format, to a processing system. The processing system converts the Bayer formatted video to (red-green-blue) RGB formatted video, which is (or is similar to) the format employed by most digital video systems.

The RGB formatted video is then provided to the detection subsystem and optionally to a viewing device, such as a remotely located laptop or portable computer. The detection subsystem then employs homographic mapping to isolate specific, select areas of the video frame for the actual detection algorithms. In particular, vehicle detection typically does not occur within an entire video frame, but rather in isolated areas such as portions of a road or near specific objects. The desired areas for detection are then converted into detection blocks that are standardized for the detection algorithms.

Thus, for example, a small trapezoidal area of interest in or near an intersection is converted into a rectangle of a size and orientation that is suitable for the detection algorithms.

Accordingly, the portion of the video image that is to be analyzed is stored as a *detection block.* The video data corresponding to the area of interest is transferred into the detection block via homographic mapping or warping. The detection block thus represents video data from the select area of interest.

The detection algorithms then operate with the detection blocks in order to identify whether moving objects are within the select area of interest. The detection operations include integration, autocorrelation, center of chromatic mass, background processing, among others to detect moving vehicles and/or any presence of vehicles.

Algorithmic detection of vehicles using the above techniques consumes a large amount of computational processing power. The processing engines that are commonly available in the wider temperature range are quite limited in the maximum processing speed available. Executing the necessary video processing for vehicle detection can cause such processors to run "too hot".

There is a need therefore, for improved video processing that provides advanced detection needs within a limited processing power budget.

### Summary

Disclosed are apparatus and methods that employ image processing and which at least in some embodiments address the above-mentioned drawbacks of the prior art.

The invention is defined by the appended claims.

The features and advantages of the above-described embodiment, as well as others, will become more readily apparent to those of ordinary skill in the art by reference to the following detailed description and accompanying drawings.

### Brief Description of the Drawings

Fig. 1 shows a schematic block diagram of a system for image processing that includes at least one embodiment of the invention;
Fig. 2 shows a representative schematic diagram of a camera and an image frame;
Fig. 3 shows a representation of two dimensional views of the image frame of Fig. 3 and corresponding detection blocks;
Fig. 4 shows a diagram of a portion 402 of a video frame in mosaiced format;
Fig. 5 shows a flow diagram of an exemplary set of operations that may be used to generate a detection block from a select video block of video frame data that is in mosaiced format;
Fig. 6 shows a flow diagram of an exemplary operation that may be used to generate a look-up table in accordance with at least some embodiments of the invention; and
Fig. 7 shows a more detailed schematic block diagram of an exemplary embodiment of the image processing system of Fig. 1.

### Detailed Description

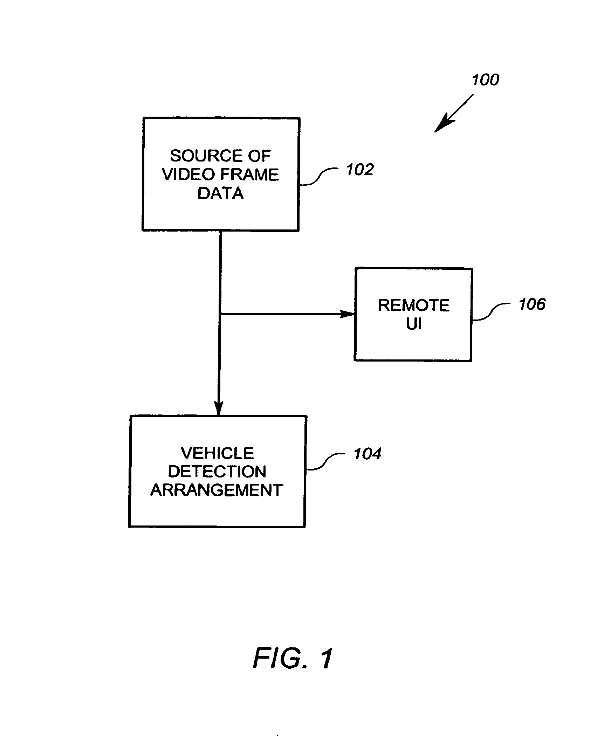

Fig. 1 shows a block diagram of a system 100 for image processing that includes at least one embodiment of the invention. The system 100 includes a source of video frame data 102, a vehicle detection arrangement 104 and at least one remote user interface 106.

The source of video frame data 102 is a device or set of devices that is configured to provide video frame data in a first format. The first format of video frame data includes a plurality of pixels, each pixel containing single color data. By way of example, the source of video frame data 102 is a digital camera or digital video camera that employs a high-speed CCD (Charge-Coupled Device) or CMOS (Complementary-Metal-Oxide-Semiconductor) light-sensitive imager arrays as an initial sensor. This array outputs data values corresponding to individual pixels (individual small picture elements) according to how much light intensity is measured at that particular pixel within the imager array. Such devices are well-known.

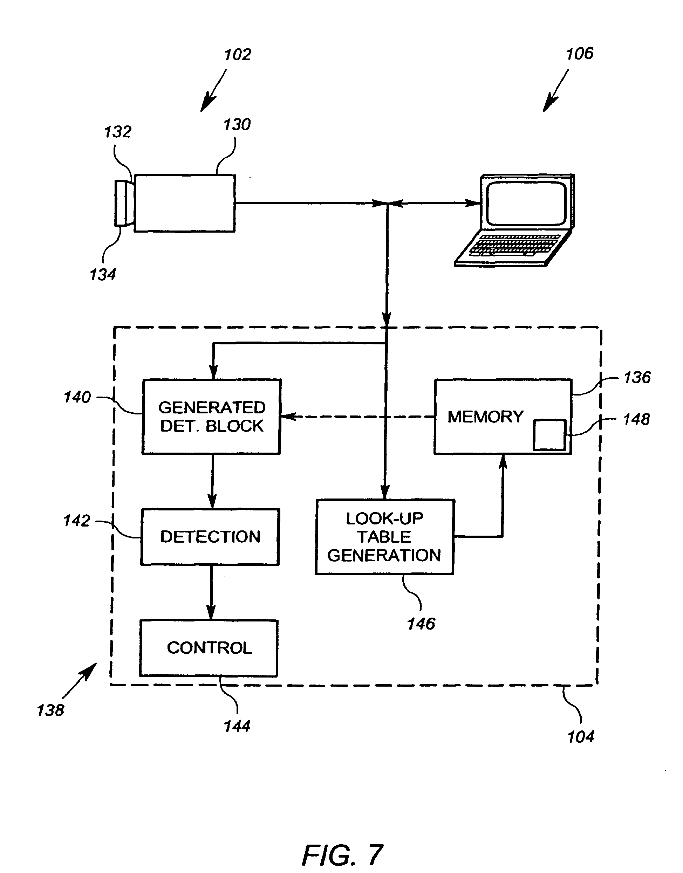

The first format of the video frame data may suitably comprise a mosaic formatted data. In particular, many video cameras are configured to generate mosaiced pixel data, sometimes referred to as Bayer-formatted data. Bayer format cameras typically includes a color mosaic lens positioned in front of an array of monochrome CCD detectors, and transmit the luminance value for each element instead of the individual color components. Fig. 7, discussed further below, shows an exemplary embodiment that employs a mosaic lens camera 130.

Such a source effectively transmits only one color component value per pixel, and for each four pixels transferred, two are green pixels, one is a blue pixel, and one is a red pixel. As a result, green-spectrum video information is effectively subsampled at 50% resolution, while red and blue information is each effectively subsampled at 25% resolution. In any event, the frame data includes a plurality of pixels having only single-color information.

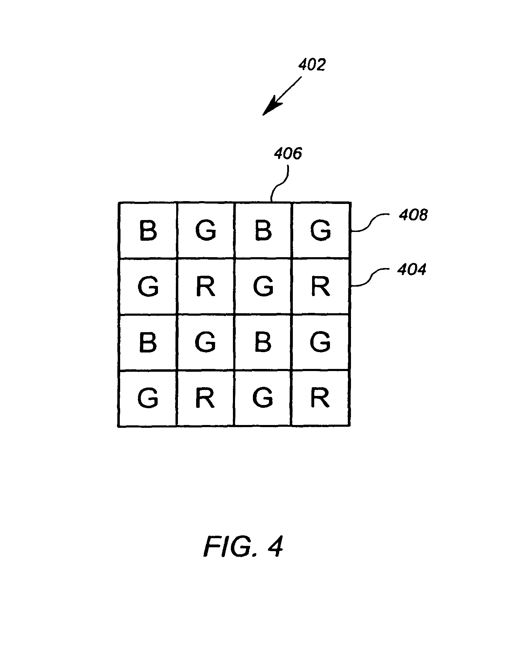

In the interest of further explanation of mosaic formatted data, Fig. 4 shows a diagram of a portion 402 of a video frame in single color or mosaiced format. The portion 402 includes a mosaic of single color red, blue and green pixels 404, 406 and 408 respectively.

Implementation of the invention is not limited to the particular single color mosaic formats shown in Fig. 4. At least some embodiments of the invention are compatible with each of the four possible Bayer formats, and can readily be adapted to other similar subsampling mosaic patterns.

Returning again to Fig. 1, the source of video frame data 102 is operably coupled to provide the video frame data in the first format to each of the video detection arrangement 104 and the remote user interface 106.

The video detection arrangement 104 includes data processing equipment and associated circuitry that is capable of performing image processing as described herein. The video detection arrangement 104 is configured to employ homographic mapping to generate a detection block from the video frame data. In this embodiment, the detection block is representative of a select subset of the video frame image, and typically includes a portion of the image that has been preselected as potentially containing vehicles to be detected. Homographic mapping (or warping) is employed to generate a re-aligned view, for example, a rectangle generated from a trapezoid, such that angled points of view are rectified into a normal (i.e perpendicular) point of view which aids the detection algorithms.

In an alternative application, a vehicle detection system may be used in a security system or other surveillance system that employs rotating cameras. In such a case, homographic mapping allows various points of view from a moving (e.g. rotating) camera to be compared and processed from the same point of view. In this alternative embodiment, the vehicle detection system may be connected to receive the video frame data from cameras used for general surveillance. General surveillance cameras often are configured to rotate to cover more area.

Referring again to Fig. 1, the source of video data 102 in this embodiment is typically a stationary image capturing device. In this case, the homographic mapping is used to map select portions (and non-standard shapes) of video data into a detection block. The detection block has a size and shape (square or rectangular) that is compatible with the detection algorithms. The select portion of the video data is often user selected and will often have at least some dimensions (size, shape) that differ from that of the detection block, and typically is significantly larger.

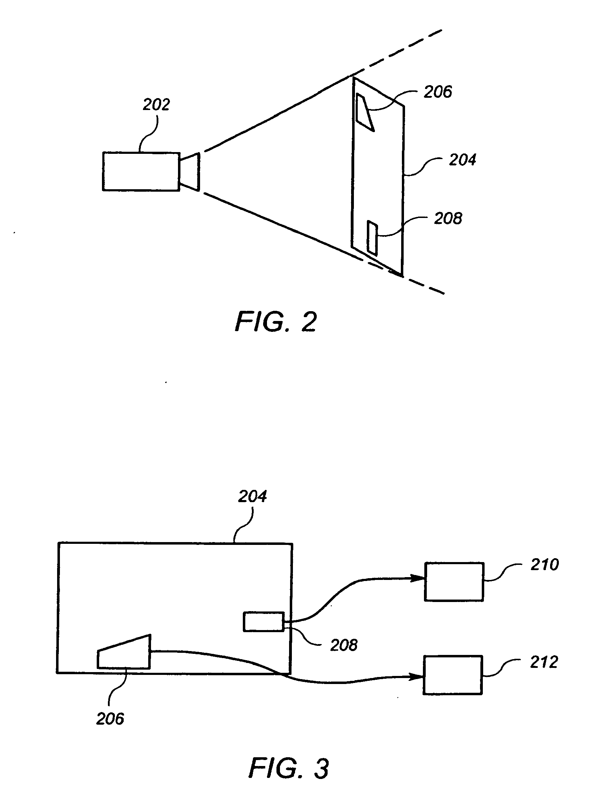

For example, Figs. 2 and 3 illustrate by way of example how homographic mapping is employed to generate consistent, normalized representations of select (and variably shaped and sized) portions of a video frame image. Fig. 2 shows a camera 202 (which may suitably be used as the source of video information 102 of Fig. 1), and an image frame 204. The image frame 204 consists of the two dimensional field of vision of the camera 202. In this example, a user has defined two areas of interest 206, 208 in the image frame. For example, these areas of interest 206, 208 may include approaches to different parts of a traffic intersection. As can be seen in Fig. 2, the areas of interest 206, 208 are in different locations within the image frame 204, have different shapes, and have different sizes.

Fig. 3 shows a representation of two dimensional views of the image frame 204, the areas of interest or image portions 206, 208 and corresponding detector blocks 210, 212. Homographic mapping techniques are used to map the image portions 206, 208 to like-sized and similarly oriented detection blocks 210, 212. The detection algorithms, not shown, then work with the detection blocks 210, 212. As a consequence, the same detection algorithms may be used for a variety of image portions having unique size, shape and orientation. Such homographic morphing techniques are known.

Referring again to Fig. 1, the vehicle detection system 104 is thus configured to perform homographic mapping of an image of interest from each video frame received from the video camera 202, even though the video frame data remains in single color format. The vehicle detection system 104 is further configured convert the single color format pixels of the input video to multiple color pixels (e.g. red, green, blue) of the detection block.

To this end, the vehicle detection system 104 associates each pixel of the detection block with the pixel data of multiple pixels from the video frame data. Each pixel of the detection block is associated with pixel data of multiple pixels with different color data, such that each pixel of the detection block has information representative of multiple colors. Referring to Fig. 4, for example, a single pixel of the detection block may contain information from each of a red pixel 404, a blue pixel 406 and a green pixel 408.

In any event, the resulting detection block thus only contains information from a small subset of the original video frame, and contains pixels that have been converted or demosaiced to multiple color format.

Thus, the video detection arrangement 104 is configured to convert the single color format video data of a portion (and only a portion) of the original video frame data that corresponds to the detection block into multi-color formatted video data.

In contrast to the prior art, the video detection arrangement 104 only performs demosaicing of the portion of video frame data that corresponds to the select detection block, instead of the entire video frame. This saves computational power as the interpolation schemes used for demosaicing are computationally intensive.

Referring again generally to Fig. 1, the video detection arrangement 104 is further configured to perform vehicle detection algorithms on one or more detection blocks generated as described above. Vehicle detection in a video block may be accomplished using various techniques that are known in the art, such as integration, autocorrelation, center of chromatic mass, background processing and the like.

As discussed above, the remote user interface 106 is also configured to received the video frame data in the first format. The remote user interface 106 may suitably be a general purpose or special purpose computing device. The remote user interface 106 is configured to perform demosaicing (conversion between single color pixel data of different colors to multiple color pixel data) on the entire image frame of the video frame data and display the frame data on video screen or display. Further detail regarding the demosaicing by the user interface 106 is provided below in connection with Fig. 7.

Thus, the above described image processing system 100 provides data that may be used for both viewing (via the user interface 106) and vehicle detection (via the vehicle detection arrangement 104) while reducing the computational load in the vehicle detection processing circuitry.

Fig. 7 shows a more detailed schematic block diagram of an exemplary embodiment of the image processing system 100 of Fig. 1.

In the embodiment of Fig. 7, the source of video frame data 102 is a digital camera 130 or digital video recorder that employs an array 132 of high-speed monochrome CCD detectors. This array 132 outputs data values corresponding to individual pixels (individual small picture elements) according to how much light intensity is measured at that particular pixel within the imager array 132. The camera 130 typically also includes a color mosaic lens 134 positioned in front of the array 132. The color mosaic lens 134, as is known in the art, filters light such that the luminance value for each pixel represents intensity of a specific individual color component. The output of the camera 130 may suitably be a Bayer formatted data such as shown in Fig. 4, and generally described in U.S. Patent No. 3,971,065, which is incorporated by reference. As with Fig. 1, the output data of the camera 130 is referred to as video frame data in the first format. Each set of video frame data consists of a single video frame, which is a still image.

The camera 130 is operably coupled to provide the video frame data in the first format to each of the video detection arrangement 104 and the remote user interface 106.

The video detection arrangement 104 includes processing circuitry 138 including at least one memory 136 and associated circuitry that is capable of carrying out the steps 140, 142, 144 and 146 as described herein. The processing circuitry 138 is configured to receive the video frame data in the first format and generate (step 140) pixel data of a detection block representative of a subset of the video frame data in which detection of images is to be performed. To generate the detection block, the processing circuitry 138 uses a look-up table 148 (stored in the memory 136) to associate pixel data of multiple pixels of the single color video frame data to each pixel of the detection block.

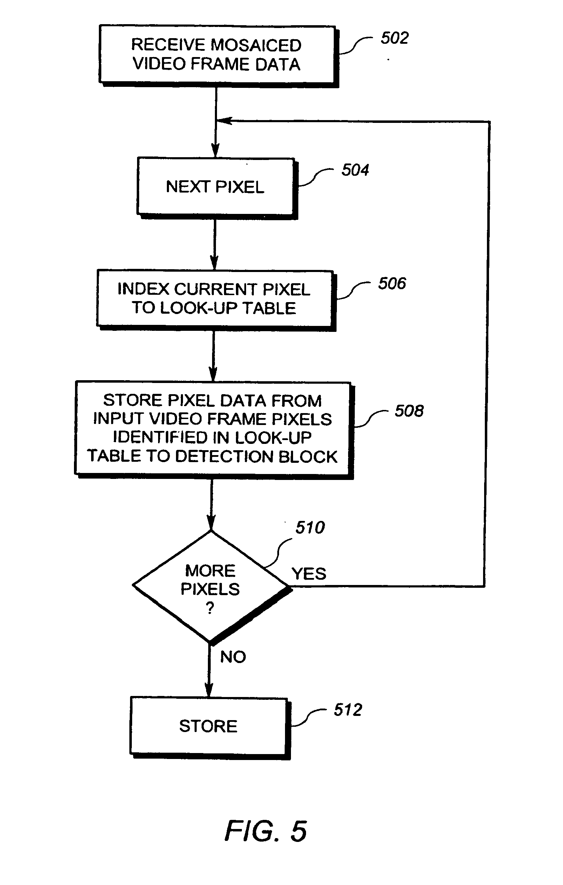

The generated detection block thus comprises pixel data representative of a select portion of the input video image data. The pixel data for each pixel of the generated detection block has multiple color components. Fig. 5, discussed below, provides an exemplary set of steps that carry out the function of step 140 described above.

The processing circuitry 138 is further operable to perform image detection. In particular, in step 142, the processing circuitry performs vehicle detection algorithms on one or more detection blocks generated as described above. Vehicle detection in a video block may be accomplished using various techniques that are known in the art, such as integration, autocorrelation, center of chromatic mass, background processing and the like. Such detection techniques vary and would be known to those of ordinary skill in the art.

Thereafter, in step 144, the processing circuitry 138 performs control based on the image detection. By way of example, a traffic signal operation may be altered as a result of a detection of the presence of a vehicle in one or more of the detection blocks generated in step 140. In another example, the absence of movement in one or more monitored areas may result in alteration of the traffic signal operation. Various traffic control methods based on detected vehicle presence or movement are known.

In order to perform the above steps 140, 142 and 144, and particularly step 140, the look-up table 148 must be generated to map select user image portions to the detector block. In this embodiment, the processing circuitry 138 is operable to generate the look-up table 148 used for this detection block generation. In particular, the processing circuit 138 may suitably receive input identifying select portions of an image (e.g. image portions 206, 208 of Fig. 2) in which image detection is to take place via step 142. The image portion may have a square, rectangular, trapezoidal, parallelogram, or other shape, and may be of various sizes and locations with the video frame. The input may be received from the user interface 106.

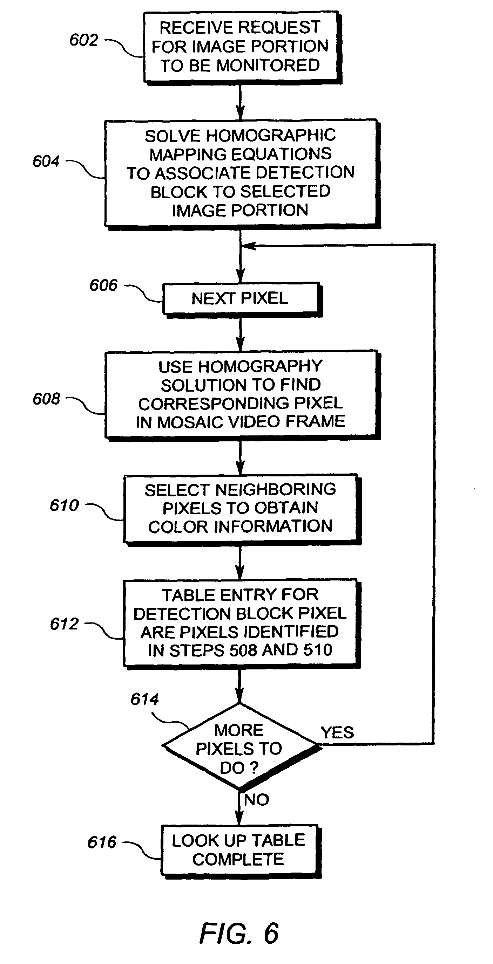

The processing circuit 138 then uses homographic mapping, among other things, to create a look-up table that associates each pixel of a detection block with multiple single color pixels of an input video frame that correspond to the user-selected image portion. The multiple single color pixels preferably include different color pixels of the input video frame such that each pixel of the detection block can have multiple color information. Fig. 6, discussed further below, shows an exemplary operation in which such a look-up table 148 may be generated.

Referring again to Fig. 7, as discussed above, the remote user interface 106 is also configured to receive the video frame data in the first format. The remote user interface 106 in this embodiment is a portable (e.g. "laptop") computer that is operably coupled to both the camera 130 and the processing circuit 138. The computer 106 is configured and/or programmed to perform the steps described herein. The computer 106 is largely used for set-up and maintenance of the camera 130 and/or the processing circuit 138, and thus is not necessarily permanently affixed to the system 100.

As discussed above in connection with Fig. 1, the remote user interface/computer 106 is configured to perform demosaicing (conversion between single color pixel data of different colors to multiple color pixel data) on the entire image frame of the video frame data and display the frame data on video screen or display. The frame rate of display at the computer 106 may suitably be as low as 100 images per minute, which allows for the demosaicing process in normal personal computing devices.

Various demosaicing operations are known, including nearest-neighbor interpolation, as a linear interpolation, as a bilinear interpolation, as a cubic spline interpolation, or as a different type of spline interpolation, typically with better visual quality yielded by the more complex interpolations. In some embodiments, the computer 106 is configurable to select from a plurality of demosaicing operations, as well as frame rates so that the balance between frame rate, accuracy and complexity, and available computer processing power at the user interface/computer 106 can be selectively adjusted.

As discussed above, during normal operation of a configured system, the look-up tables 148 for one or more user-selected image portions have already been generated and stored in the memory 136. The normal operation consists of steps 140, 142 and 144 as described above.

With regard to step 140, Fig. 5 shows in further detail the operations that are used to generate a detection block from a select video block of video frame data that is in mosaiced format.

In step 502, the video frame data in the first format is received from the source of video frame data 102. As discussed above, the video frame data is in single color (mosaiced) format.

Steps 504 to 510 represent a for-next loop that indexes through each pixel of the detection block. Thus, in step 504, the next pixel of the detection block is indexed. This is referred to herebelow as the *current pixel.*

In step 506, the location of the current pixel within the detection block is indexed to the look-up table 148. As discussed above, the look-up table 148 associates each pixel of the detection block with a plurality of pixels within the video frame data. This plurality of pixels preferably includes at least one green pixel, at least one blue pixel and at least one red pixel of the mosaiced video frame data. In step 508, the pixel data of the pixels of the video frame data associated with the current pixel is obtained form the video frame data and stored as the pixel data for the current pixel of the detection block.

In step 510, it is determined whether there are additional pixels in the image block. If so, then the next pixel is identified in step 504 and the process is repeated accordingly. If not, then the entire detection block has been created, and step 512 is executed. In step 512, the detection block is stored in memory, not shown, for use by the image detection operations 142.

The above operations represent an improvement over the prior art in that the detection arrangement need not demosaic an entire video frame. Only a select portion of the video frame data is effective demosaiced. In this embodiment, a look-up table 148 is used to generate each pixel of the detection block from different colored pixels of the mosaiced video frame data. The look-up table 148 further accomplishes the homographic mapping because the selection of the location of pixels of the video frame data correspond to the pixels of the detection block are identified via homographic mapping. Thus, the development of a suitable look-up table is required to carry out the above-described operations.

Accordingly, Fig. 6 shows an exemplary set of operations that may be used to develop a look-up table that is used to carry out step 506 of Fig. 5 and step 140 of Fig. 7. In particular, Fig. 6 shows in detail a set of operations that carry out step 146 of Fig. 7. In addition, the software table provided below includes code for developing the look-up table. In this embodiment, the look-up table 148 is generated by the processing circuit 138 of the detection arrangement 104. In other embodiments, the processing equipment in the user interface 106 may perform the steps of Fig. 6 to generate the look-up table 148, which would then be transferred and stored in the memory 148. Nevertheless, in the present embodiment, the operations of Fig. 6 are carried out by the processing circuit 138 of the image detection arrangement 104.

In step 602, the processing circuit 138 receives input defining a block of a video frame image that is to be mapped into a detection block. Such a block of video frame image constitutes a portion of the image field of the camera in which vehicle location or presence is to be detected and/or monitored. For example, the processing circuit 138 may receive from the user interface 106 information identifying image portions image portions 206 and/or 208 (see Figs. 2 and 3) for monitoring. The processing circuit 138 receives the information identifying the select image portions in any suitable manner, such as by identification of the corner pixels of the image portion.

It is noted that the user may define multiple image portions, such as the portions 206 and 208 of Figs. 2 and 3, for monitoring. Steps 604 to 616 of Fig. 6 are performed separately for each identified image portion. Thus, for example, if image portions 206 and 208 of Figs. 2 and 3 are selected by the user, steps 604-616 are performed to prepare a look-up table for portion 206, and steps 604-616 are also performed to prepare a separate look-up table for portion 208.

As an initial step 604, homographic mapping equations are solved for the selected image portion and the detection block. Homographic mapping equations associate the detection block (e.g. the block 210), with a portion of an image frame (e.g. portion 206 of Fig. 3). The detection block and the selected image portion typically have a different size and/or shape. The selected image portion is also embedded within a larger video frame (e.g. frame 204 of Fig. 3), whereas the detection block is not. Solving such homographic equations involves in this case eight unknowns and eight equations. Such homographic equations and their solutions are known, and an example is provided in the attached software code.

The resulting homographic equations help provide a translation from a location in the detection block to a location in the video image data.

In steps 606 to 614, the look-up table 148 is populated on a pixel-by-pixel basis, using the homography solution from step 604.

In step 606, the next pixel in the detection block is indexed. This pixel is referred to below as the *current pixel.* In step 608, the processing circuitry 138 uses the homography solution from step 604 to associate the current pixel with a pixel of the video frame within the selected image portion. Thus, for example, if the current pixel is the upper left corner of the detection block, then homography solution 604 would likely associate the current pixel with the upper left hand corner of the selected image portion.

As a result, the homography solution is used in step 608 to identify a pixel of the video frame (within the selected image portion) that corresponds to the current pixel. This identified pixel is referred to as the *corresponding pixel.* The corresponding pixel in each set of video frame data will contain pixel data having single color information.

In step 610, the processing circuitry 138 identifies and selects neighboring pixels that are configured to have other single colors. For example, if the corresponding pixel is a red pixel, then the processor in step 610 identifies neighboring blue and green pixels. Thus, the corresponding pixel and the neighboring pixels should include information for all of the pixel colors of the output video image data format.

Preferably, the two neighboring pixels are selected such that they include at least one pixel from a different horizontal line such that the corresponding pixel and the two neighboring pixels form a cluster. For example, referring to Fig. 4, if the corresponding pixel is determined in step 608 to be the green pixel 408, then the processor may suitably select the red pixel 404 and the blue pixel 406 as the neighboring pixels. It is noted that in Bayer formatted mosaiced data (see e.g., Fig. 4), pixel data from at least two lines is necessary to obtain representation from all available pixel colors.

In step 612, the table entry for the current pixel is created. The table entry identifies the locations of the corresponding pixel determined in step 608 and the neighboring pixels determined in step 610. After step 612, the look-up table 148 has been populated for at least the current pixel. In this embodiment, the look-up table 148 identifies three single color pixels of the input video frame data that are used to form the current pixel of the detection block.

In step 614, the processor determines whether a table entry must be determined for any more pixels in the detection block. If so, then the processor returns to step 606 to process the next pixel of the detection block. If not, however, then the processor proceeds to step 616.

In step 616, the processor has completed the look-up table creation operation. The look-up table 148 now provides a translation from a mosaiced image block having a first set of dimensions to a demosaiced image block (the detection block) having a second set of dimensions, including a preferred square or rectangular shape.

Table I shows exemplary software code used for generating the look up table 148. Table II shows software code for generating a detection block using the look up table 148.

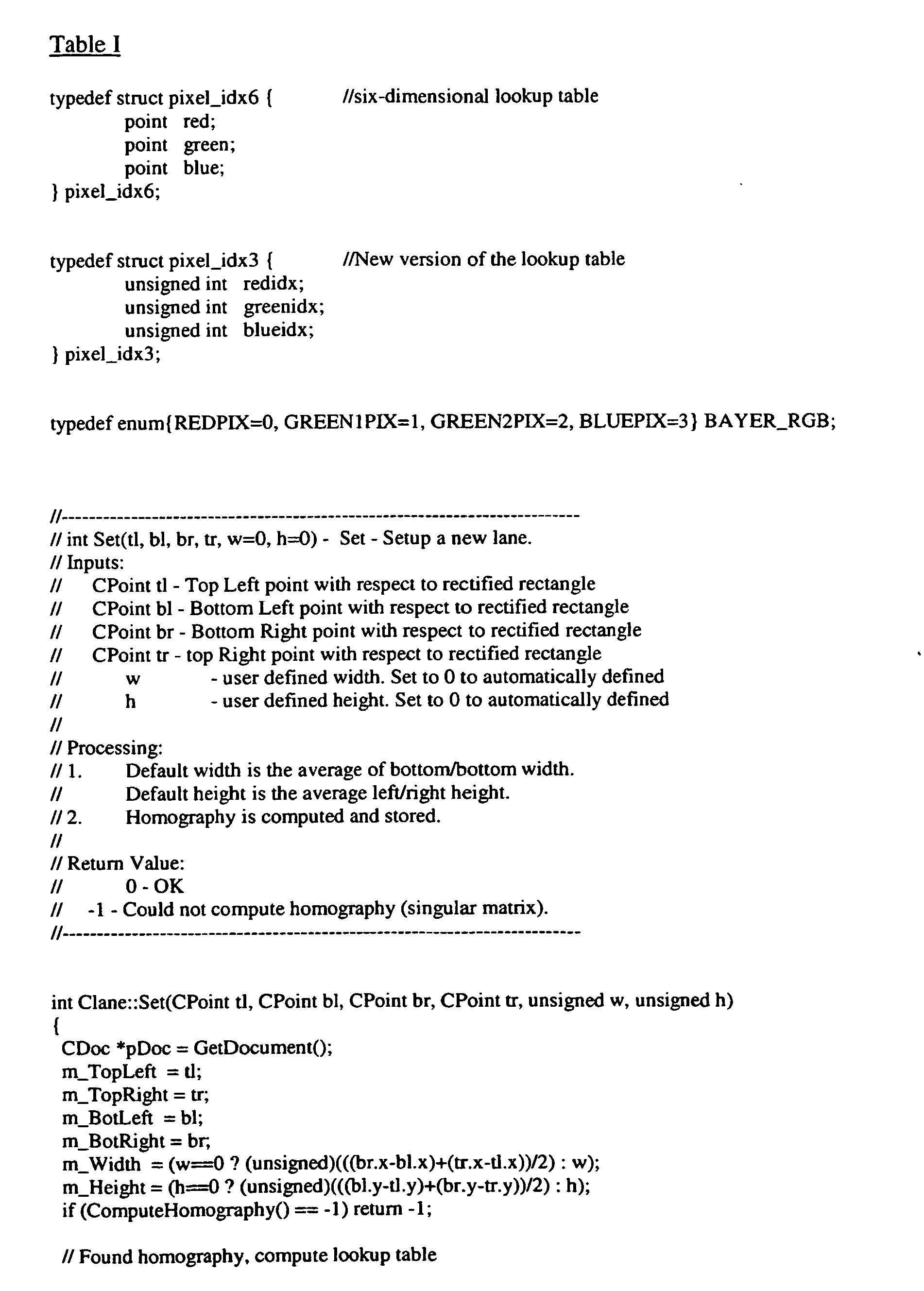

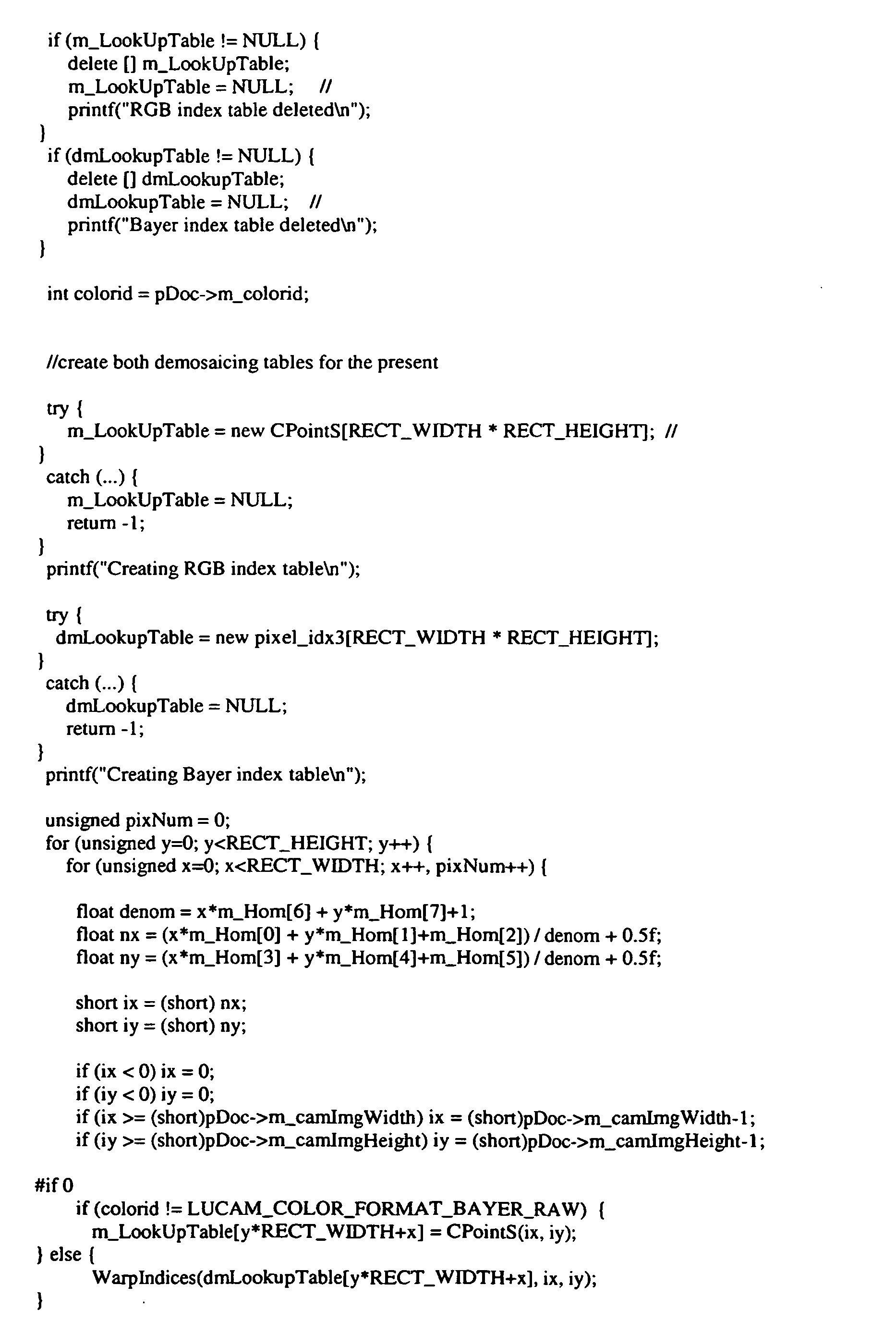

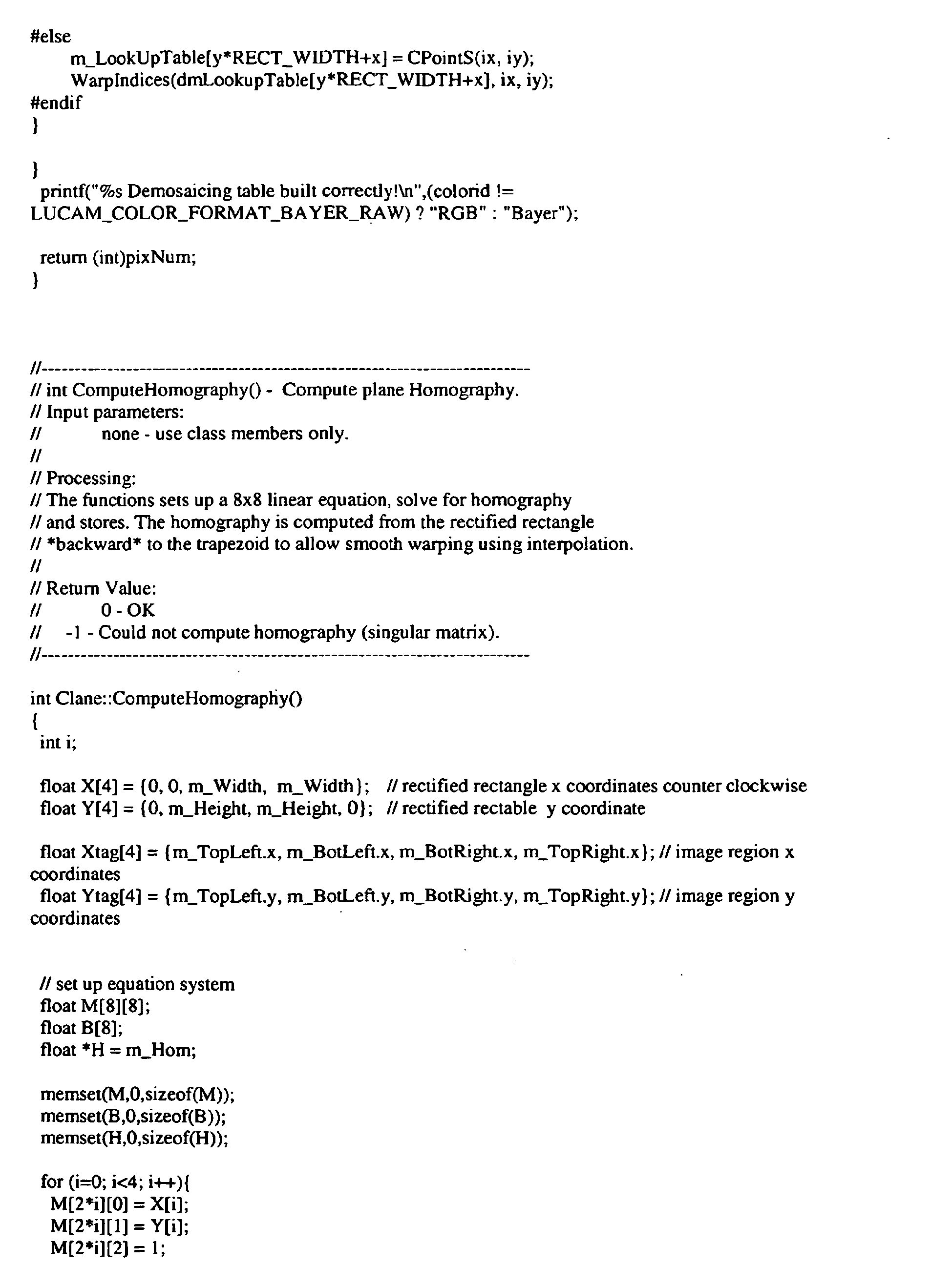

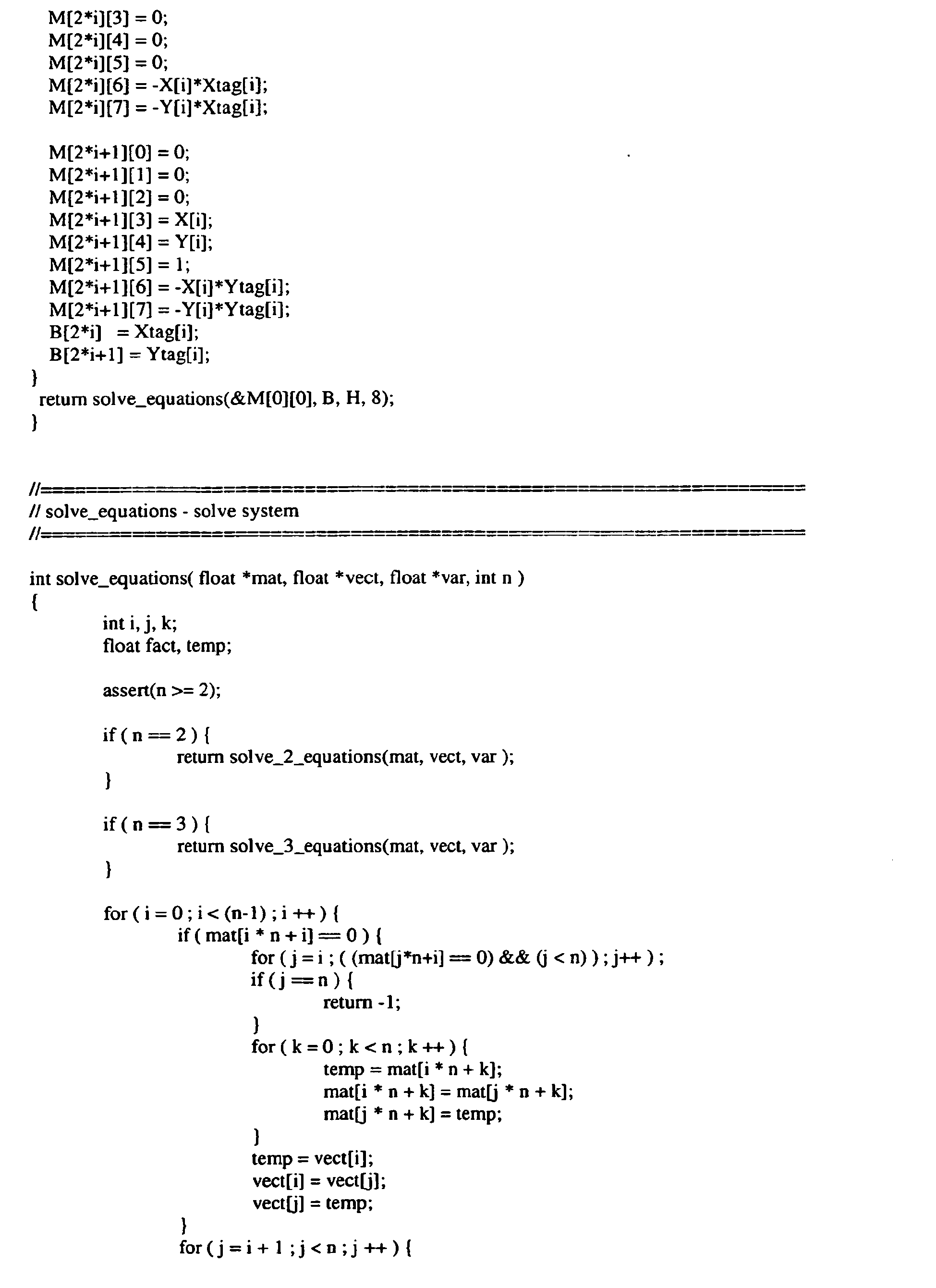

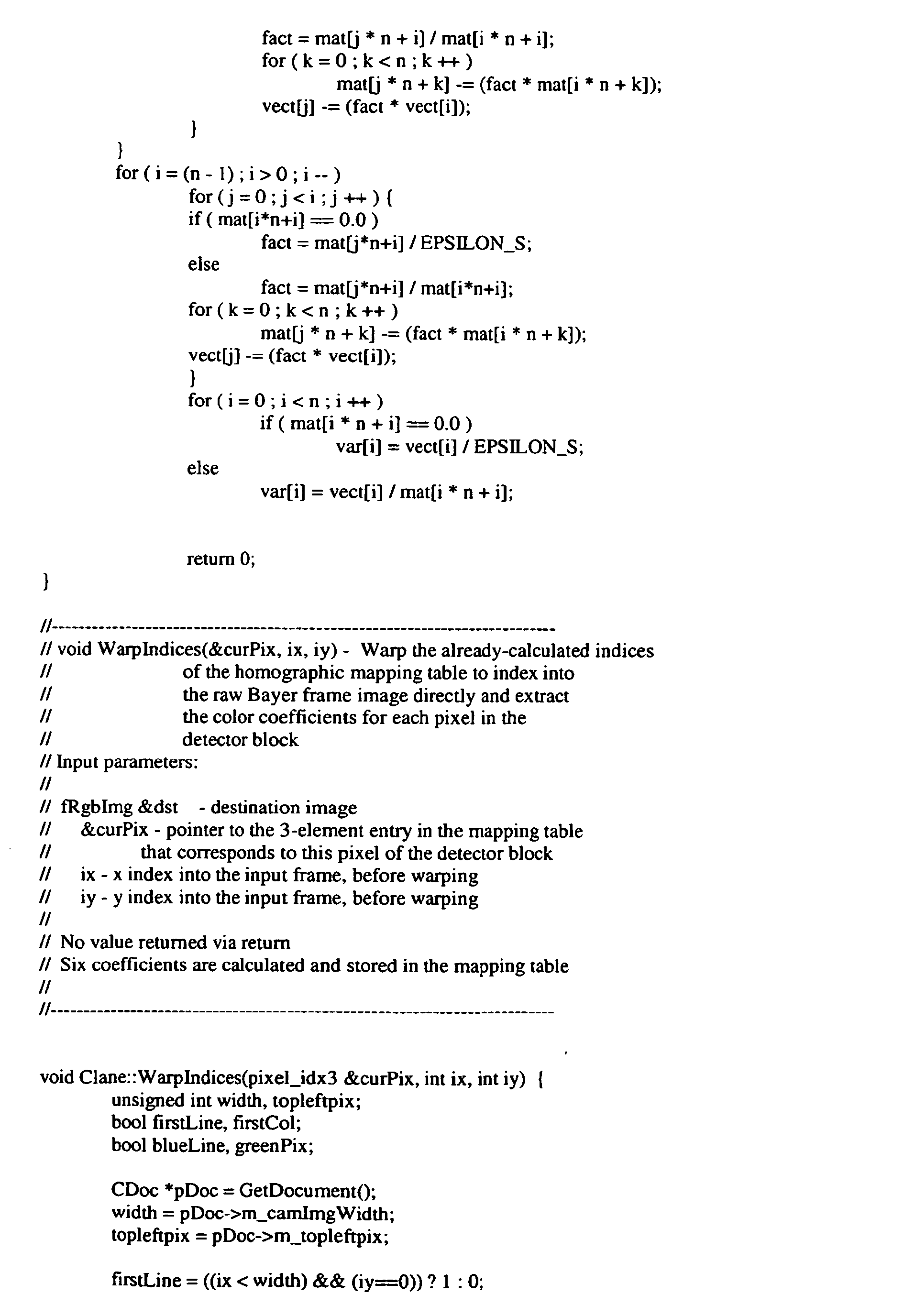

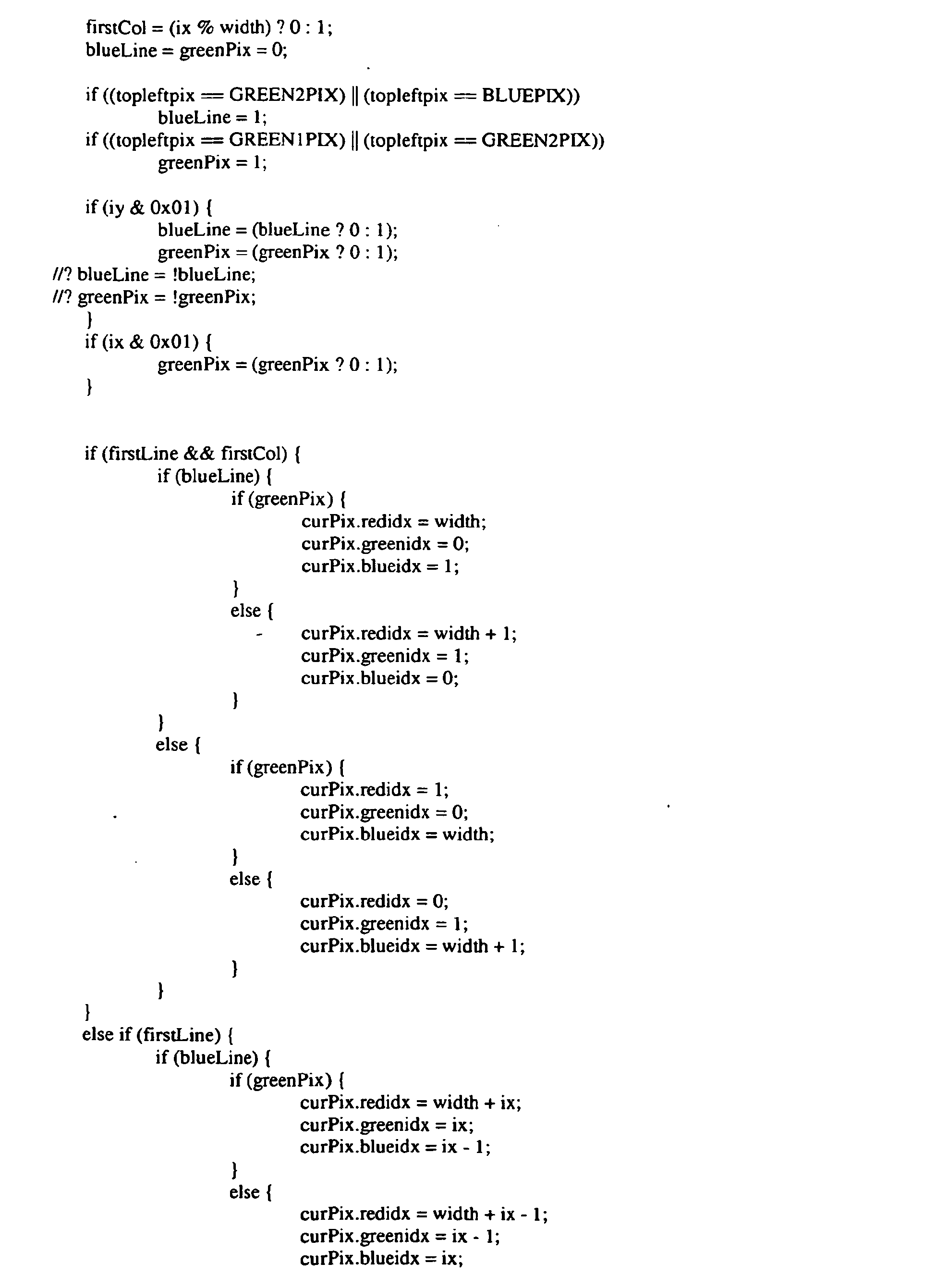

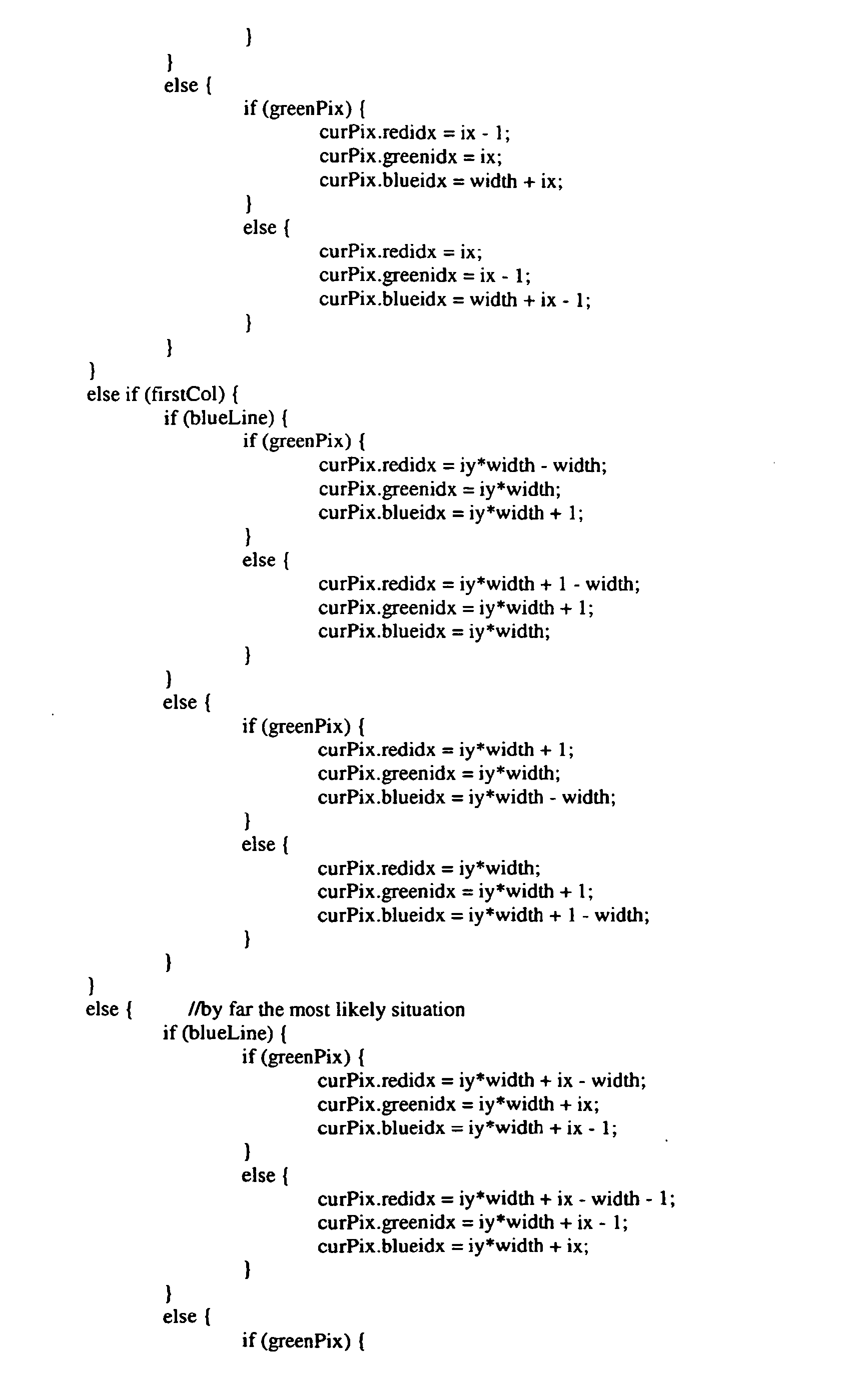

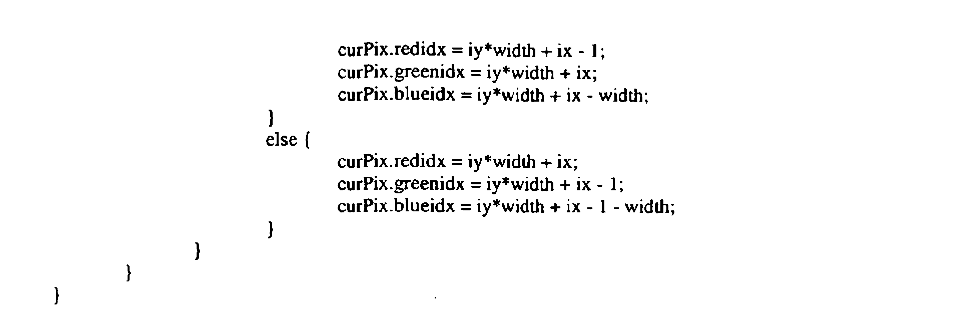

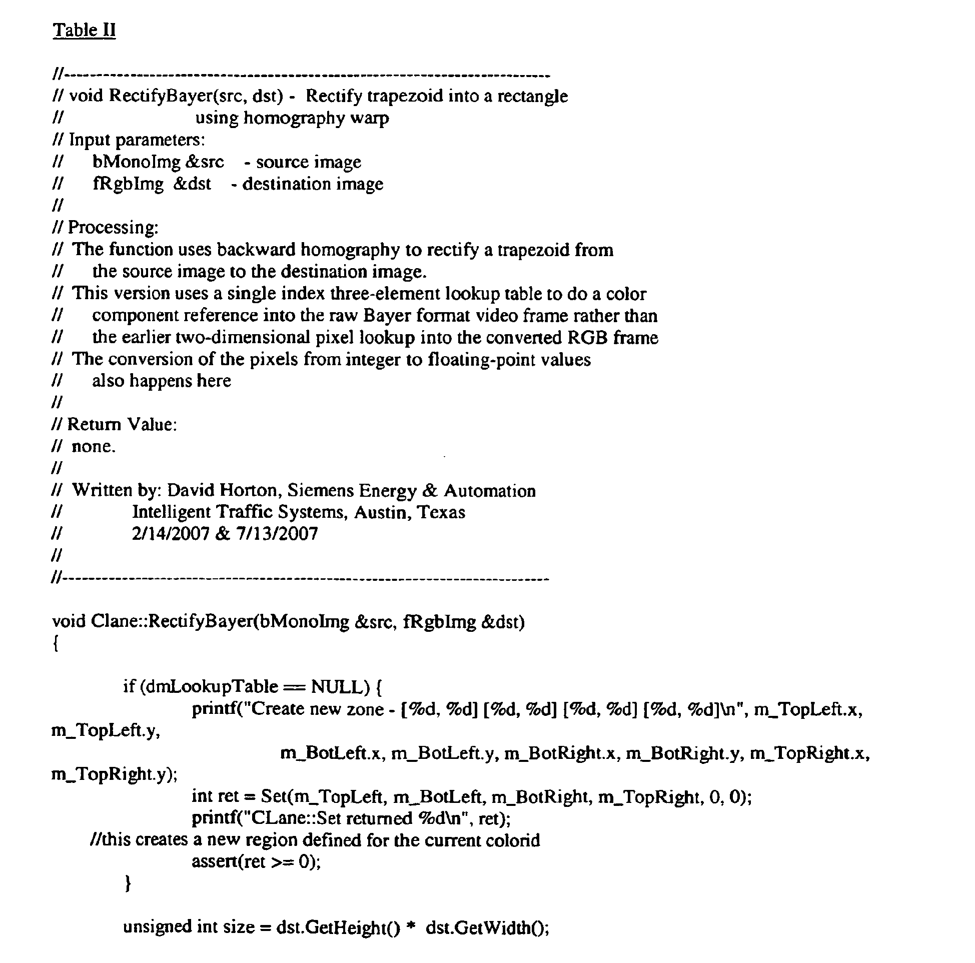

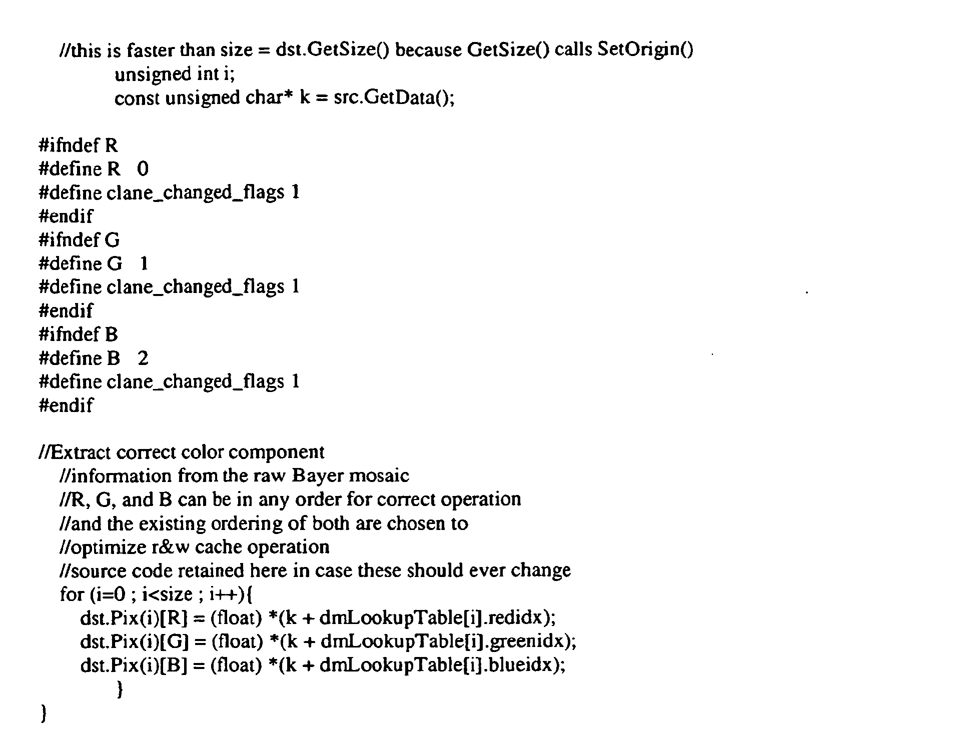

It will be understood that the above describe embodiments are merely exemplary, and that the scope of the invention is limited by the scope of the appended claims only.

## Claims

1. A method for detecting an object in an image, said method comprising:
a) capturing the image;
b) providing single color video frame data of the image in a first format that includes pixel data for a plurality pixels, the pixel data of each image pixel consisting of single color data;
c) generating multiple color pixel data for each pixel of a detection block representative of an image portion which is a subset of the single color video frame data and which is homographically associated to said detection block, wherein the multiple color pixel data of each pixel of the detection block is generated from single color pixel data of image portion pixels identified using said homographic association;
d) providing the generated multiple color pixel data of the detection block to an object detection algorithm adapted to detect an object inside the detection block.

2. The method of claim 1, wherein step c) further comprises associating each pixel of the detection block with the pixel data of multiple pixels having single color data representative of multiple colors.

3. The method of claim 1, wherein step c) further comprises associating each pixel of the detection block with the pixel data of three contiguous pixels of the subset of video frame data.

4. The method of claim 1, wherein step d) further comprises providing the detection block such that each pixel includes red, green and blue color data.

5. The method of claim 1, further comprising:
e) providing the video frame data in the first format to a computing device;
f) employing the computing device to demosaic frames of video frame data in the first format to generate demosaiced frame video data.

6. The method of claim 1, wherein step a) further comprises employing a digital camera that employs a mosaic lens.

7. An arrangement for detecting an object in an image, said arrangement comprising:
a camera arrangement configured to capture an image and provide single color video frame data of the image in a first format that includes pixel data for a plurality pixels, the pixel data of each pixel consisting of single color data;
a processing circuit configured to
generate multiple color pixel data for each pixel of a detection block representative of an image portion which is a subset of the single color video frame data and which is homographically associated to said detection block, wherein the multiple color pixel data of each pixel of the detection block is generated from single color pixel data of image portion pixels identified using said homographic association;
provide the generated multiple color pixel data of the detection block to an object detection algorithm adapted to detect an object inside the detection block.

8. The arrangement of claim 7, wherein the camera arrangement further comprises a CCD camera and a mosaic lens.

9. The arrangement of claim 7, wherein the processing circuit is further configured to associate each pixel of the detection block with the pixel data of multiple pixels having single color data representative of multiple colors.

10. The arrangement of claim 7, wherein the processing circuit is further configured to associating each pixel of the detection block with the pixel data of three contiguous pixels of the subset of video frame data.

## Patentansprüche

1. Verfahren zur Erkennung eines Objekts in einem Bild, wobei besagtes Verfahren umfasst:
a) Aufnahme des Bildes;
b) Bereitstellung von Einzelfarb-Video-Frame-Daten des Bildes in einem ersten Format, das Pixeldaten für eine Vielzahl von Pixeln beinhaltet, wobei die Pixeldaten jedes einzelnen Bildpixels aus Einzelfarbdaten bestehen;
c) Erzeugung einer Vielzahl von Farbpixeldaten für jedes einzelne Pixel eines Erkennungsblocks, die einen Bildbereich wiedergeben, der eine Teilmenge der Einzelfarb-Video-Frame-Daten ist und der besagtem Erkennungsblock homographisch zugeordnet ist, wobei die Vielzahl von Farbpixeldaten jedes einzelnen Pixels des Erkennungsblocks aus Einzelfarbpixeldaten der Bildbereichspixel erzeugt wird, die über besagte homographische Zuordnung identifiziert werden;
d) Bereitstellung der erzeugten Vielzahl von Farbpixeldaten des Erkennungsblocks an einen Objekterkennungsalgorithmus, der derart angepasst ist, dass er ein Objekt im Erkennungsblock erkennt.

2. Verfahren nach Anspruch 1, wobei Schritt c) ferner die Zuordnung jedes Pixels des Erkennungsblocks zu den Pixeldaten einer Vielzahl von Pixeln umfasst, deren Einzelfarbdaten eine Vielzahl von Farben wiedergeben.

3. Verfahren nach Anspruch 1, wobei Schritt c) ferner die Zuordnung jedes Pixels des Erkennungsblocks zu den Pixeldaten von drei benachbarten Pixeln aus der Teilmenge der Video-Frame-Daten umfasst.

4. Verfahren nach Anspruch 1, wobei Schritt d) ferner die Bereitstellung des Erkennungsblocks derart umfasst, dass jedes einzelne Pixel Farbdaten für Rot, Grün und Blau beinhaltet.

5. Verfahren nach Anspruch 1, das ferner umfasst:
e) Bereitstellung der Video-Frame-Daten im ersten Format an eine Recheneinrichtung;
f) Verwendung der Recheneinrichtung zur Entfernung der Mosaikstrukturen der Frames von Video-Frame-Daten im ersten Format, um vormals als Mosaik vorgesehene Frame-Video-Daten zu erzeugen.

6. Verfahren nach Anspruch 1, wobei Schritt a) ferner die Verwendung einer Digitalkamera umfasst, die eine Mosaiklinse verwendet.

7. Anordnung zur Erkennung eines Objekts in einem Bild, wobei besagte Anordnung umfasst:
eine Kameraanordnung, die derart konfiguriert ist, dass sie ein Bild aufnimmt und Einzelfarb-Video-Frame-Daten des Bildes in einem ersten Format bereitstellt, das Pixeldaten für eine Vielzahl von Pixeln beinhaltet, wobei die Pixeldaten jedes einzelnen Pixels aus Einzelfarbdaten bestehen;
eine Verarbeitungsschaltung, die derart konfiguriert ist, dass
sie eine Vielzahl von Farbpixeldaten für jedes einzelne Pixel eines Erkennungsblocks erzeugt, die einen Bildbereich wiedergeben, der eine Teilmenge der Einzelfarb-Video-Frame-Daten ist und der besagtem Erkennungsblock homographisch zugeordnet ist, wobei die Vielzahl von Farbpixeldaten jedes einzelnen Pixels des Erkennungsblocks aus Einzelfarbpixeldaten der Bildbereichspixel erzeugt werden, die über besagte homographische Zuordnung identifiziert werden;
sie die erzeugte Vielzahl von Farbpixeldaten des Erkennungsblocks an einen Objekterkennungsalgorithmus bereitstellt, der derart angepasst ist, dass er ein Objekt im Erkennungsblock erkennt.

8. Anordnung nach Anspruch 7, wobei die Kameraanordnung ferner eine CCD-Kamera und eine Mosaiklinse umfasst.

9. Anordnung nach Anspruch 7, wobei die Verarbeitungsschaltung ferner derart konfiguriert ist, dass sie jedes Pixel des Erkennungsblocks den Pixeldaten einer Vielzahl von Pixeln zuordnet, deren Einzelfarbdaten eine Vielzahl von Farben wiedergeben.

10. Anordnung nach Anspruch 7, wobei die Verarbeitungsschaltung ferner derart konfiguriert ist, dass sie jedes Pixel des Erkennungsblocks den Pixeldaten von drei benachbarten Pixeln aus der Teilmenge der Video-Frame-Daten zuordnet.

## Revendications

1. Procédé pour détecter un objet dans une image, ledit procédé consistant :
a) à saisir l'image ;
b) à fournir des données de trames vidéo unicolores de l'image dans un premier format qui comprennent des données de pixels pour une pluralité de pixels, les données de pixels de chaque pixel d'image consistant en données unicolores ;
c) à produire des données de pixels multicolores pour chaque pixel d'un bloc de détection représentatif d'une partie d'image qui est une sous-série des données de trames vidéo unicolores et qui est associée homographiquement audit bloc de détection, étant entendu que les données de pixels multicolores de chaque pixel du bloc de détection sont produites à partir de données de pixels unicolores de pixels de partie d'image identifiés en utilisant ladite association homographique ;
d) à fournir les données de pixels multicolores produites du bloc de détection à un algorithme de détection d'objet adapté pour détecter un objet à l'intérieur du bloc de détection.

2. Procédé selon la revendication 1, dans lequel l'étape c) consiste par ailleurs à associer chaque pixel du bloc de détection aux données de pixels de multiples pixels ayant des données unicolores représentatives de multiples couleurs.

3. Procédé selon la revendication 1, dans lequel l'étape c) consiste par ailleurs à associer chaque pixel du bloc de détection aux données de pixels de trois pixels contigus de la sous-série de données de trames vidéo.

4. Procédé selon la revendication 1, dans lequel l'étape d) consiste par ailleurs à fournir le bloc de détection de telle sorte que chaque pixel inclue des données sur les couleurs rouge, vert et bleu.

5. Procédé selon la revendication 1, consistant par ailleurs :
e) à fournir les données de trames vidéo dans le premier format à un dispositif de calcul ;
f) à employer le dispositif de calcul pour démosaïquer des trames des données de trames vidéo dans le premier format pour produire des données de trames vidéo démosaïquées.

6. Procédé selon la revendication 1, dans lequel l'étape a) consiste par ailleurs à employer une caméra numérique qui emploie une lentille à effet mosaïque.

7. Dispositif pour détecter un objet dans une image, ledit dispositif comprenant :
un dispositif de caméra configuré pour saisir une image et fournir des données de trames vidéo unicolores de l'image dans un premier format qui comprennent des données de pixels pour une pluralité de pixels, les données de pixels de chaque pixel consistant en données unicolores ;
un circuit de traitement configuré :
pour produire des données de pixel multicolores pour chaque pixel d'un bloc de détection représentatif d'une partie d'image qui est une sous-série des données de trames vidéo unicolores et qui est associé homographiquement audit bloc de détection, étant entendu que les données de pixels multicolores de chaque pixel du bloc de détection sont produites à partir de données de pixels unicolores de pixels de partie d'image identifiés en utilisant ladite association homographique ;
pour fournir les données de pixels multicolores produites du bloc de détection à un algorithme de détection d'objet adapté pour détecter un objet à l'intérieur d'un bloc de détection.

8. Dispositif selon la revendication 7, dans lequel le dispositif de caméras comprend par ailleurs une caméra à dispositif de couplage de charge (CCD) et une lentille à effet mosaïque.

9. Dispositif selon la revendication 7, dans lequel le circuit de traitement est par ailleurs configuré pour associer chaque pixel du bloc de détection aux données de pixel de multiples pixels ayant des données unicolores représentatives de multiples couleurs.

10. Dispositif selon la revendication 7, dans lequel le circuit de traitement est par ailleurs configuré pour associer chaque pixel du bloc de détection aux données de pixel de trois pixels contigus de la sous-série de données de trames vidéo.
